# EUROPÄISCHE PATENTSCHRIFT

(11) **EP 3 133 263 B1**
(45) Veröffentlichungstag und Bekanntmachung des Hinweises auf die Patenterteilung: **29.08.2018**
(21) Anmeldenummer: 16163541.2
(22) Anmeldetag: 01.04.2016
(51) Int. Cl.: F02C 6/12

(54) **ROTORKARTUSCHE FÜR EINE TURBOMASCHINE EINER BRENNKRAFTMASCHINE, TURBOMASCHINE EINER BRENNKRAFTMASCHINE UND VERFAHREN ZUR MONTAGE EINER TURBOMASCHINE EINER BRENNKRAFTMASCHINE**
ROTOR CARTRIDGE FOR A TURBO ENGINE OF A COMBUSTION ENGINE, TURBOMACHINE OF AN INTERNAL COMBUSTION ENGINE AND METHOD FOR ASSEMBLING A TURBOMACHINE OF AN INTERNAL COMBUSTION ENGINE
CARTOUCHE DE ROTOR POUR UNE TURBOMACHINE D'UN MOTEUR À COMBUSTION INTERNE, TURBOMACHINE D'UN MOTEUR À COMBUSTION INTERNE ET PROCÉDÉ DE MONTAGE D'UNE TURBOMACHINE D'UN MOTEUR À COMBUSTION INTERNE

(30) Priorität: 15.04.2015 DE 102015206816
(43) Veröffentlichungstag der Anmeldung: 22.02.2017
(73) Patentinhaber: ROBERT BOSCH GMBH, 70442 Stuttgart (DE)
(72) Erfinder: DOEHRING, Jochen, 70439 Stuttgart-Stammheim (DE)

(56) Entgegenhaltungen:
- EP-A1- 1 391 586
- WO-A2-2012/027188

## Beschreibung

Die Erfindung betrifft eine Rotorkartusche für eine Turbomaschine einer Brennkraftmaschine. Die Erfindung betrifft des Weiteren eine Turbomaschine einer Brennkraftmaschine. Die Erfindung betrifft überdies ein Verfahren zur Montage einer Turbomaschine einer Brennkraftmaschine.

### Stand der Technik

Allgemein dienen Turbomaschinen dazu, den Wirkungsgrad einer Brennkraftmaschine zu verbessern und damit dessen Leistung zu steigern. In dem Gehäuse der Turbomaschine ist hierzu eine Welle um die Längsachse mittels Radiallagern drehbar gelagert. Dabei sind ein Turbinenrad und ein Verdichterrad der Turbomaschine auf der Welle angeordnet. Das Turbinenrad wird hierzu über einen Abgasmassenstrom angetrieben und treibt wiederum das Verdichterrad an. Aufgrund von Fluidströmungen, die an dem Turbinenrad und dem Verdichterrad angreifen, können dabei auch starke Axialkräfte auftreten. Solche Axialkräfte können von den Radiallagern normalerweise nicht geeignet aufgenommen werden, sodass im Allgemeinen entsprechend wenigstens ein Axiallager vorgesehen wird.

Bei aerodynamisch gelagerten Rotoren im Bereich der kleinen Turbomaschinen wird die Axiallagerung derzeit durch eine auf der Welle angeordnete Scheibe, welche mit der Welle fest verbunden oder gefügt ist, dargestellt. Aufgrund der hohen Umfangsgeschwindigkeiten sowie hohen Temperaturgradienten der Welle bzw. der Axiallagerung ergeben sich hohe Anforderungen an die Wellentoleranzen bzw. das Wellenmaterial. Die thermischen und mechanischen Verformungen an einer Axiallagerscheibe liegen bei diesen Anforderungen außerhalb des zulässigen Bereiches und sind damit funktionskritisch. Die Welle dehnt sich axial aufgrund thermischer Dehnung, wobei ein Absolutwert der Längenänderung mit einer längeren Welle steigt. Dies kann dazu führen, dass das ein Impeller, d.h. das Verdichterrad und/oder das Turbinenrad am Gehäuse der Turbomaschine streifen.

Aerodynamische Axiallager benötigen eine Mindestfläche, um auftretende Axialkräfte aufzunehmen bzw. abzustützen, ohne dass eine Berührung der drehenden Axiallagerscheibe zum stehenden Gegenpart auftritt. Das Spiel zwischen Verdichterrad und Verdichtergehäuse ist maßgeblich für den Wirkungsgrad des gesamten Verdichters.

Die DE 10 2009 017 356 A1 offenbart eine magnetisierbare Axiallagerscheibe für einen Turbolader, wobei die Dicke bzw. Breite des Querschnitts der Axiallagerscheibe variiert. Die Dicke bzw. Breite des Querschnitts der Axiallagerscheibe ist derart ausgebildet, dass die Axiallagerscheibe eine ausreichend große magnetische Fläche und gleichzeitig ein möglichst geringes Trägheitsmoment aufweist.

Die EP 1391 586 A1 offenbart einen Abgasturbolader mit einem Gehäuse und einer im Gehäuse um ihre Längsachse drehbar angeordneten und mittels Lager gelagerten Welle, wobei die Lager jeweils eine auf der Welle sitzende Lagerscheibe und wenigstens einen diesem an zumindest einer Seite axial unter Bildung eines Spaltes gegenüberliegenden Stator aufweisen.

### Offenbarung der Erfindung

Die vorliegende Erfindung schafft eine Rotorkartusche für eine Turbomaschine, insbesondere einer Brennkraftmaschine, mit einer in ein Gehäuse der Turbomaschine einfügbaren Hülse, in welcher zumindest ein Radiallager und in/oder an welcher ein Axiallager angeordnet sind, einer in der Hülse angeordneten, durch das zumindest eine Radiallager und das Axiallager gelagerten Welle, einem an einem ersten Endabschnitt der Welle, auf der Welle angeordneten Turbinenrad und einem an einem zweiten Endabschnitt der Welle, auf der Welle angeordneten Verdichterrad, und einer auf der Welle, benachbart zu einer Rückseite des Verdichterrads angeordneten Einstellscheibe, mit welcher ein Spaltmaß eines ersten Spaltes zwischen der Rückseite des Verdichterrads und einer benachbart zu der Rückseite des Verdichterrads angeordneten ersten Wandfläche des Gehäuses, und ein Spaltmaß eines zweiten Spaltes zwischen einer beschaufelten Seite des Verdichterrads und einer benachbart zu der beschaufelten Seite des Verdichterrads angeordneten zweiten Wandfläche des Gehäuses einstellbar sind.

Die vorliegende Erfindung schafft des Weiteren eine Turbomaschine, insbesondere einer Brennkraftmaschine, mit einem Gehäuse und einer in das Gehäuse eingefügten Rotorkartusche.

Die vorliegende Erfindung schafft überdies ein Verfahren zur Montage einer Turbomaschine. Das Verfahren umfasst ein Vormontieren einer Rotorkartusche durch Anordnen zumindest eines Radiallagers in einer Hülse der Rotorkartusche, ein Anordnen eines Axiallagers in oder an der Hülse der Rotorkartusche, ein Anordnen einer durch das zumindest eine Radiallager und das Axiallager gelagerten Welle in der Hülse der Rotorkartusche, ein Anordnen eines Turbinenrads an einem ersten Endabschnitt der Welle, auf der Welle, ein Anordnen eines Verdichterrads an einem zweiten Endabschnitt der Welle, auf der Welle, ein Einstellen eines Spaltmaßes eines ersten Spaltes zwischen der Rückseite des Verdichterrads und einer benachbart zu der Rückseite des Verdichterrads angeordneten ersten Wandfläche des Gehäuses, und eines Spaltmaßes eines zweiten Spaltes zwischen einer beschaufelten Seite des Verdichterrads und einer benachbart zu der beschaufelten Seite des Verdichterrads angeordneten zweiten Wandfläche des Gehäuses durch Anordnen einer Einstellscheibe benachbart zu einer Rückseite des Verdichterrads auf der Welle. Das Verfahren umfasst des Weiteren ein Einfügen der vormontierten Rotorkartusche in ein Gehäuse der Turbomaschine.

Eine Idee der vorliegenden Erfindung ist es, bei kleinen hochdrehenden Turbomaschinen kleine Spalte zwischen Verdichterrad und Gehäusedeckel zu ermöglichen. Des Weiteren soll ein Wellendurchmesser und eine Gesamtlänge der Welle reduziert werden, damit können Fertigungskosten minimiert, funktionskritische Bereiche eliminiert und damit die Dynamik des Systems optimiert werden. Die modulare Anordnung von Axial-/Radiallagern hat keinen Einfluss auf die Einstellbarkeit des Axialspaltes zwischen Verdichterrad und Gehäusedeckel. Des Weiteren kann eine Maßtoleranzkette einschließlich dynamischer Einflüsse wie beispielsweise eine Längenänderung bzw. Verformung der Welle kleinstmöglich gehalten werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass das Axiallager einen ersten Anschlag und einen zweiten Anschlag aufweist, wobei der erste Anschlag an einem ersten axialen Endabschnitt der Hülse in oder an der Hülse und der zweite Anschlag an einem zweiten axialen Endabschnitt der Hülse in oder an der Hülse angeordnet ist. Durch die Anordnung des ersten Anschlags des Axiallagers an einem ersten axialen Endabschnitt der Hülse sowie des zweiten Anschlags des Axiallagers an einem zweiten Endabschnitt der Hülse kann in vorteilhafter Weise ein Spiel des Axiallagers verringert werden.

Gemäß einer weiteren bevorzugten Weiterbildung ist vorgesehen, dass der erste Anschlag des Axiallagers benachbart zum Verdichterrad und der zweite Anschlag des Axiallagers benachbart zum Turbinenrad angeordnet ist. Somit kann durch Entfallen der Axiallagerscheibe in vorteilhafter Weise eine Reduzierung der Maßtoleranzkette auf eine kleinstmögliche Teileanzahl erreicht werden.

Gemäß einer weiteren bevorzugten Weiterbildung ist vorgesehen, dass das Spaltmaß des ersten Spaltes zwischen der Rückseite des Verdichterrads und der benachbart zu der Rückseite des Verdichterrads angeordneten, ersten Wandfläche des Gehäuses zwischen 0,01 mm und 0,02 mm beträgt und das Spaltmaß des zweiten Spaltes zwischen der beschaufelten Seite des Verdichterrads und der benachbart zu der beschaufelten Seite des Verdichterrads angeordneten, zweiten Wandfläche des Gehäuses zwischen 0,01 mm und 0,03 mm beträgt. Somit kann vorzugsweise eine wesentliche Verringerung eines Spiels des Axiallagers erreicht werden. Ein maximales axiales Spiel zwischen Rotor und Gehäuse beträgt somit vorzugsweise 0,05 mm.

Gemäß einer weiteren bevorzugten Weiterbildung ist vorgesehen, dass zwischen der Rückseite des Verdichterrads und einer äußeren Wandfläche des ersten Anschlags des Axiallagers eine erste Graphitscheibe und zwischen einer Rückseite des Turbinenrads und einer äußeren Wandfläche des zweiten Anschlags des Axiallagers eine zweite Graphitscheibe angeordnet ist. Die jeweiligen Graphitscheiben tragen in vorteilhafter Weise dazu bei, einen direkten Kontakt der Rückseite des Turbinenrads mit dem ersten Anschlag des Axiallagers sowie der Rückseite des Verdichterrads mit dem zweiten Anschlag des Axiallagers zu verhindern.

Gemäß einer weiteren bevorzugten Weiterbildung ist vorgesehen, dass die zweite Graphitscheibe bei einem Stillstand und/oder einer Anlaufphase der Welle an der Rückseite des Turbinenrads anliegt. Während einer Betriebsphase der Welle bildet sich in vorteilhafter Weise ein Luftspalt zwischen der zweiten Graphitscheibe und der Rückseite des Turbinenrads, sodass das Turbinenrad reibungsfrei läuft.

Gemäß einer weiteren bevorzugten Weiterbildung ist vorgesehen, dass in und/oder an der Hülse eine Wasserkühlungsanordnung zum Kühlen des Axiallagers und/oder des zumindest einen Radiallagers angeordnet ist. Die Hülse ist somit vorzugsweise derart ausgebildet, dass diese das Axiallager und/oder das zumindest eine Radiallager während eines Betriebs der Turbomaschine effektiv kühlt und somit einer temperaturbedingten axialen Ausdehnung der Welle entgegenwirkt.

Gemäß einer weiteren bevorzugten Weiterbildung ist vorgesehen, dass die Hülse ein Federelement und/oder einen Aktor aufweist, welche dazu ausgebildet sind, eine bei einem Betrieb der Turbomaschine temperaturbedingte Längenänderung und/oder axialkraftbedingte Positionsänderung der Welle auszugleichen, wobei die Welle durch das Federelement und/oder den Aktor mit einer definierbaren Kraft in Axialrichtung beaufschlagbar ist. Somit kann in vorteilhafter Weise eine auf die Welle von der Verdichterseite und/oder der Turbinenseite wirkende Axialkraft durch die Hülse ausgeglichen werden. Dies führt zu einer geringeren Beanspruchung und demzufolge längeren Lebensdauer der Welle sowie der Lagerkomponenten.

Gemäß einer weiteren bevorzugten Weiterbildung ist vorgesehen, dass die Hülse ein Piezoelement oder einen Drucksensor aufweist, welche dazu ausgebildet sind, eine auf die Welle wirkende Axialkraft zu messen. Ein derart erzielter Messwert kann vorzugsweise zur Berechnung einer durch ein Federelement und/oder einen Aktor auf die Welle aufzubringenden Kraft verwendet werden. Gemäß einer weiteren bevorzugten Weiterbildung ist vorgesehen, dass die Rotorkartusche an unterschiedliche Gehäuseformen und -größen der Turbomaschine anpassbar ist, wobei die Hülse in Radialrichtung größer als das Verdichterrad und kleiner als ein Diffusor der Turbomaschine ausgebildet ist. Das modulare Konzept der Rotorkartusche sowie die verringerte Anzahl von Komponenten ermöglichen somit einen vereinfachten Einbau und eine vereinfachte Einstellung des Axiallagers bei dem Einbau der Rotorkartusche in das Gehäuse der Turbomaschine.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittdarstellung einer Turbomaschine mit einer in ein Gehäuse der Turbomaschine eingefügten Rotorkartusche gemäß einer bevorzugten Ausführungsform der Erfindung;
- Fig. 2: eine Längsschnittdarstellung der Rotorkartusche gemäß der bevorzugten Ausführungsform der Erfindung; und
- Fig. 3: ein Ablaufdiagramm eines Verfahrens zur Montage der Turbomaschine gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

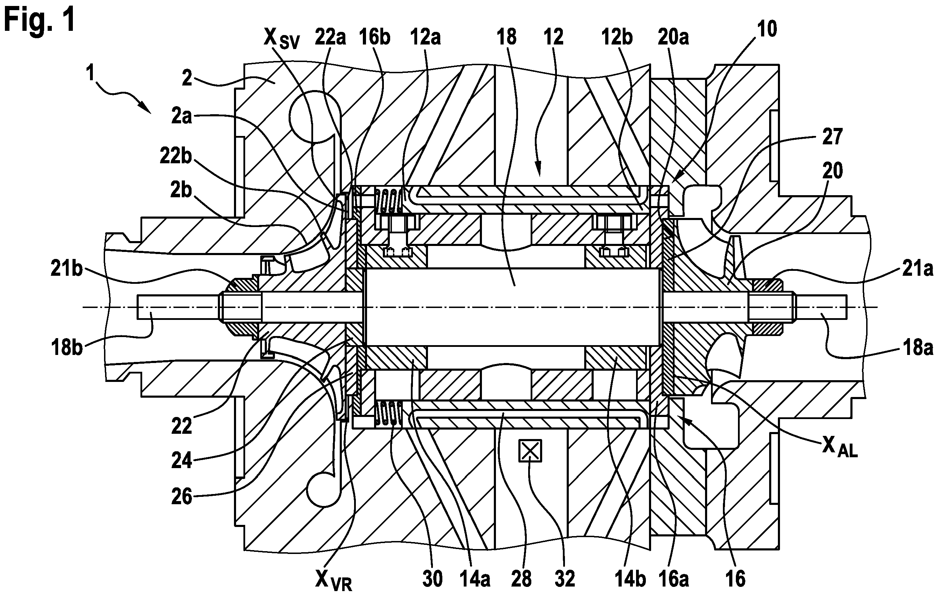

Fig. 1 zeigt eine Längsschnittdarstellung einer Turbomaschine mit einer in ein Gehäuse der Turbomaschine eingefügten Rotorkartusche gemäß einer bevorzugten Ausführungsform der Erfindung.

Die Turbomaschine 1, vorzugsweise einer Brennkraftmaschine, weist das Gehäuse 2 auf, in das die Rotorkartusche 10 eingefügt ist. Alternativ kann eine erfindungsgemäße Turbinenanordnung auch im Rahmen beispielsweise einer Wärmepumpe eines Wärmetauschers eingesetzt werden.

Die Rotorkartusche 10 weist eine Hülse 12 auf. Die Hülse 12 weist vorzugsweise eine zylindrische Form auf. Alternativ kann die Hülse 12 auch oval ausgebildet sein oder eine andere geeignete Form aufweisen. In die Hülse 12 ist vorzugsweise ein erstes Radiallager 14a und ein zweites Radiallager 14b eingefügt. Des Weiteren ist ein Axiallager 16 an axialen Endabschnitten 12a, 12b der Hülse 12 angeordnet. Das Axiallager 16 weist vorzugsweise einen ersten Anschlag 16a und einen zweiten Anschlag 16b auf. Der erste Anschlag 16a ist an dem ersten axialen Endabschnitt 12a der Hülse 12 an der Hülse 12 angeordnet. Alternativ kann der erste Anschlag 16a des Axiallagers 16 beispielsweise in der Hülse 12 angeordnet sein. Der zweite Anschlag 16b des Axiallagers 16 ist vorzugsweise an dem zweiten axialen Endabschnitt 12b der Hülse 12 an der Hülse 12 angeordnet. Alternativ kann der zweite Anschlag 16b des Axiallagers 16 beispielsweise in der Hülse 12 angeordnet sein.

Des Weiteren weist die Rotorkartusche 10 eine in der Hülse 12 angeordnete, durch das erste und zweite Radiallager 14a, 14b und das Axiallager 16 gelagerte Welle 18 auf. Die Welle 18 weist vorzugsweise im Bereich der Hülse 12 einen größeren Durchmesser und in jeweiligen Bereichen außerhalb der Hülse 12 einen verringerten Durchmesser auf. Die Welle 18 weist vorzugsweise einen ersten axialen Endabschnitt 18a und einen zweiten axialen Endabschnitt 18b auf. An dem ersten axialen Endabschnitt 18a der Welle 18 ist vorzugsweise ein Turbinenrad 20 auf der Welle 18 angeordnet. An dem zweiten axialen Endabschnitt 18b der Welle 18 ist vorzugsweise ein Verdichterrad 22 auf der Welle 18 angeordnet. Das Turbinenrad 20 ist vorzugsweise durch eine Mutter 21a auf der Welle 18 gesichert. Das Verdichterrad 22 ist vorzugsweise durch eine Mutter 21b auf der Welle 18 gesichert.

Auf der Welle 18 ist vorzugsweise benachbart zu einer Rückseite 22a des Verdichterrads 22 eine Einstellscheibe 24 angeordnet. Die Einstellscheibe 24 ist vorzugsweise in dem Bereich der Welle 18 mit verringertem Durchmesser, benachbart zu dem Bereich der Welle 18 mit einem größeren Durchmesser angeordnet. Die Einstellscheibe 24 ist vorzugsweise dazu ausgebildet, ein Spaltmaß eines ersten Spaltes X_{VR} zwischen der Rückseite 22a des Verdichterrads 22 und einer benachbart zu der Rückseite 22a des Verdichterrads 22 angeordneten ersten Wandfläche 2a des Gehäuses 2 einzustellen. Die Einstellscheibe 24 ist des Weiteren vorzugsweise dazu ausgebildet, ein Spaltmaß eines zweiten Spaltes X_{SV} zwischen einer beschaufelten Seite 22b des Verdichterrads 22 und einer benachbart zu der beschaufelten Seite 22b des Verdichterrads 22 angeordneten zweiten Wandfläche 2b des Gehäuses 2 einzustellen.

Der erste Anschlag 16a des Axiallagers 16 ist vorzugsweise benachbart zum Verdichterrad 22 angeordnet. Der zweite Anschlag 16b des Axiallagers 16 ist vorzugsweise benachbart zum Turbinenrad 20 angeordnet. Das Spaltmaß des ersten Spaltes X_{VR} zwischen der Rückseite 22a des Verdichterrads 22 und der benachbart zu der Rückseite 22a des Verdichterrads 22 angeordneten ersten

Wandfläche 2a des Gehäuses 2 beträgt vorzugsweise zwischen 0,01 mm und 0,02 mm. Das Spaltmaß des zweiten Spaltes X_{SV} zwischen der beschaufelten Seite 22b des Verdichterrads 22 und der benachbart zu der beschaufelten Seite 22b des Verdichterrads 22 angeordneten zweiten Wandfläche 2b des Gehäuses 2 beträgt vorzugsweise zwischen 0,01 mm und 0,03 mm. Die Spaltmaße können je nach Größe der Rotorkartusche bzw. der Turbomaschine variieren.

Zwischen der Rückseite 22a des Verdichterrads 22 und einer äußeren Wandfläche des ersten Anschlags 16a des Axiallagers 16 ist vorzugsweise eine erste Graphitscheibe 26 angeordnet. Alternativ kann auch eine Scheibe aus einem anderen geeigneten Material vorgesehen sein. Zwischen einer Rückseite 20a des Turbinenrads 20 und einer äußeren Wandfläche des zweiten Anschlags 16b des Axiallagers 16 ist vorzugsweise eine zweite Graphitscheibe 27 angeordnet. Alternativ kann beispielsweise eine Scheibe aus einem anderen geeigneten Material vorgesehen sein. Die zweite Graphitscheibe 27 liegt vorzugsweise bei einem Stillstand und/oder einer Anlaufphase der Welle 18 an der Rückseite 20a des Turbinenrads 20 an. Ein Spaltmaß X_{AL} zwischen der zweiten Graphitscheibe 27 und der Rückseite 20a des Turbinenrads 20 beträgt somit 0,0 mm.

Vorzugsweise ist in der Hülse 12 eine Wasserkühlungsanordnung 28 zum Kühlen des Axiallagers 16 und/oder des zumindest einen Radiallagers 14a, 14b angeordnet. Alternativ kann die Wasserkühlungsanordnung 28 zum Kühlen des Axiallagers 16 und/oder des zumindest einen Radiallagers 14a, 14b auch an der Hülse 12 angeordnet sein.

Die Hülse 12 weist des Weiteren vorzugsweise ein Federelement 30 auf. Das Federelement 30 ist vorzugsweise dazu ausgebildet, eine bei einem Betrieb der Turbomaschine 1 temperaturbedingte Längenänderung und/oder axialkraftbedingte Positionsänderung der Welle 18 auszugleichen. Das Federelement 30 beaufschlagt die Welle 18 hierzu mit einer definierbaren Kraft in Axialrichtung der Welle 18. Alternativ zu dem Federelement 30 kann beispielsweise ein Aktor in und/oder an der Hülse 12 angeordnet sein, welcher die gleiche Funktion wie das Federelement 30 aufweist.

Die Hülse 12 weist des Weiteren vorzugsweise ein Piezoelement auf, welches dazu ausgebildet ist, eine auf die Welle 18 wirkende Axialkraft zu messen. Eine solche Axialkraft kann bei einem Betrieb der Turbomaschine 1 auf die Welle 18 wirken, wenn durch das Turbinenrad 20 und das Verdichterrad 22 Axialkräfte unterschiedlicher Höhe erzeugt werden. Alternativ zum Vorsehen des Piezoelements kann beispielsweise ein Drucksensor vorgesehen sein.

Die Rotorkartusche 10 ist vorzugsweise an unterschiedliche Gehäuseformen und -größen der Turbomaschine 1 anpassbar. Die Hülse 12 ist des Weiteren in vorteilhafter Weise in Radialrichtung größer als das Verdichterrad 22 und kleiner als ein Diffusor der Turbomaschine 1 ausgebildet.

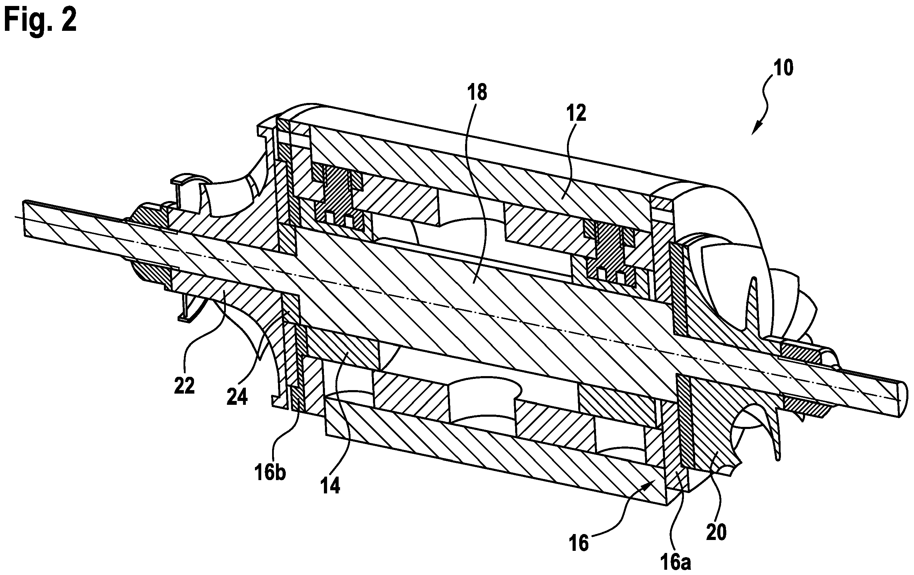

Fig. 2 zeigt eine Längsschnittdarstellung der Rotorkartusche gemäß der bevorzugten Ausführungsform der Erfindung.

Die Rotorkartusche 10 ist vorzugsweise derart ausgebildet, dass diese vor einem Einbau in das (in Fig. 2 nicht gezeigte) Gehäuse vormontierbar ist. Der erste Anschlag 16a des Axiallagers 16 und der zweite Anschlag 16b des Axiallagers 16 sind vorzugsweise derart ausgebildet, dass diese durch am Umfangsbereich ausgebildete Ausformungen, an welchen die Welle 18 anliegt, eine Bewegung der Welle in Axialrichtung verhindern. Die Einstellscheibe 24 zum Einstellen des Spaltmaßes des ersten Spaltes zwischen der Rückseite des Verdichterrads und der benachbart zu der Rückseite des Verdichterrads angeordneten ersten Wandfläche des Gehäuses, und zum Einstellen des Spaltmaßes des zweiten Spaltes zwischen der geschaufelten Seite des Verdichterrads und der benachbart zu der beschaufelten Seite des Verdichterrads angeordneten zweiten Wandfläche des Gehäuses ist vorzugsweise zwischen dem zweiten Anschlag 16b des Axiallagers 16 und der Rückseite des Verdichterrads 22 angeordnet. Alternativ kann zusätzlich zu der Einstellscheibe 24 auch eine weitere Einstellscheibe zwischen dem ersten Anschlag 16a des Axiallagers 16 und der Rückseite des Turbinenrads 20 vorgesehen sein.

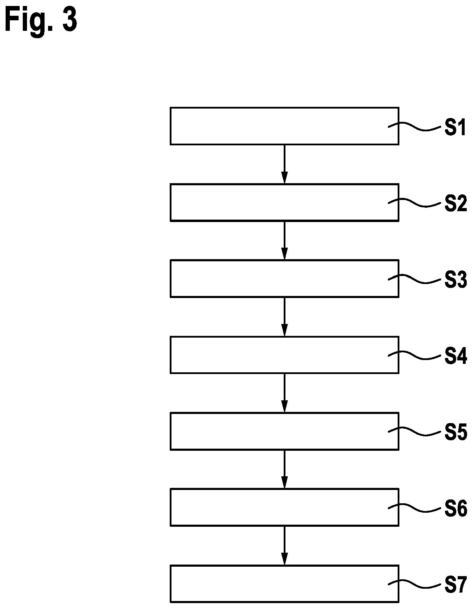

Fig. 3 zeigt ein Ablaufdiagramm eines Verfahrens zur Montage der Turbomaschine gemäß der bevorzugten Ausführungsform der Erfindung.

Das Verfahren umfasst ein Vormontieren einer Rotorkartusche durch Anordnen S1 zumindest eines Radiallagers in einer Hülse der Rotorkartusche, ein Anordnen S2 eines Axiallagers in oder an der Hülse der Rotorkartusche, ein Anordnen S3 einer durch das zumindest eine Radiallager und das Axiallager gelagerten Welle in der Hülse der Rotorkartusche, ein Anordnen S4 eines Turbinenrads an einem ersten Endabschnitt der Welle, auf der Welle, ein Anordnen eines Verdichterrads S5 an einem zweiten Endabschnitt der Welle, auf der Welle, ein Einstellen S6 eines Spaltmaßes eines ersten Spaltes zwischen der Rückseite des Verdichterrads und einer benachbart zu der Rückseite des Verdichterrads angeordneten ersten Wandfläche des Gehäuses, und eines Spaltmaßes eines zweiten Spaltes zwischen einer beschaufelten Seite des Verdichterrads und einer benachbart zu der beschaufelten Seite des Verdichterrads angeordneten zweiten Wandfläche des Gehäuses durch Anordnen einer Einstellscheibe benachbart zu einer Rückseite des Verdichterrads auf der Welle. Das Verfahren umfasst des Weiteren ein Einfügen S7 der vormontierten Rotorkartusche in ein Gehäuse der Turbomaschine.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Die Radiallager sowie das Axiallager sind in der vorliegenden Ausführungsform als aerodynamische Lager ausgebildet. Alternativ können vorstehend bezeichnete Lager auch durch ein anderes geeignetes Lagerkonzept ausgebildet sein.

## Patentansprüche

1. Rotorkartusche (10) für eine Turbomaschine (1) einer Brennkraftmaschine, mit:
einer in ein Gehäuse (2) der Turbomaschine (1) einfügbaren Hülse (12), in welcher zumindest ein Radiallager (14a, 14b) und in und/oder an welcher ein Axiallager (16) angeordnet sind;
einer in der Hülse (12) angeordneten, durch das zumindest eine Radiallager (14a, 14b) und das Axiallager (16) gelagerten Welle (18); und
einem an einem ersten axialen Endabschnitt (18a) der Welle (18), auf der Welle (18) angeordneten Turbinenrad (20) und einem an einem zweiten axialen Endabschnitt (18b) der Welle (18), auf der Welle (18) angeordneten Verdichterrad (22); **gekennzeichnet durch**
eine auf der Welle (18), benachbart zu einer Rückseite (22a) des Verdichterrads (22) angeordneten Einstellscheibe (24), mit welcher ein Spaltmaß eines ersten Spaltes X_{VR} zwischen der Rückseite (22a) des Verdichterrads (22) und einer benachbart zu der Rückseite (22a) des Verdichterrads (22) angeordneten ersten Wandfläche (2a) des Gehäuses (2), und ein Spaltmaß eines zweiten Spaltes X_{SV} zwischen einer beschaufelten Seite (22b) des Verdichterrads (22) und einer benachbart zu der beschaufelten Seite (22b) des Verdichterrads (22) angeordneten zweiten Wandfläche (2b) des Gehäuses (2) einstellbar sind.

2. Rotorkartusche nach Anspruch 1, **dadurch gekennzeichnet, dass** das Axiallager (16) einen ersten Anschlag (16a) und einen zweiten Anschlag (16b) aufweist, wobei der erste Anschlag (16a) an einem ersten axialen Endabschnitt (12a) der Hülse (12) in oder an der Hülse (12) und der zweite Anschlag (16b) an einem zweiten axialen Endabschnitt (12b) der Hülse (12) in oder an der Hülse (12) angeordnet ist.

3. Rotorkartusche nach Anspruch 2, **dadurch gekennzeichnet, dass** der erste Anschlag (16a) des Axiallagers (16) benachbart zum Verdichterrad (22) und der zweite Anschlag (16b) des Axiallagers (16) benachbart zum Turbinenrad (20) angeordnet ist.

4. Rotorkartusche nach einem der vorhergehenden Ansprüche, **dadurch gekennzeichnet, dass** das Spaltmaß des ersten Spaltes X_{VR} zwischen der Rückseite (22a) des Verdichterrads (22) und der benachbart zu der Rückseite (22a) des Verdichterrads (22) angeordneten ersten Wandfläche (2a) des Gehäuses (2) zwischen 0,01mm und 0,02mm beträgt und das Spaltmaß des zweiten Spaltes X_{SV} zwischen der beschaufelten Seite (22b) des Verdichterrads (22) und der benachbart zu der beschaufelten Seite (22b) des Verdichterrads (22) angeordneten zweiten Wandfläche (2b) des Gehäuses (2) zwischen 0,01mm und 0,03mm beträgt.

5. Rotorkartusche nach einem der vorhergehenden Ansprüche, **dadurch gekennzeichnet, dass** zwischen der Rückseite (22a) des Verdichterrads (22) und einer äußeren Wandfläche des ersten Anschlags (16a) des Axiallagers (16) eine erste Graphitscheibe (26) und zwischen einer Rückseite (20a) des Turbinenrads (20) und einer äußeren Wandfläche des zweiten Anschlags (16b) des Axiallagers (16) eine zweite Graphitscheibe (27) angeordnet ist.

6. Rotorkartusche nach Anspruch 5, **dadurch gekennzeichnet, dass** die zweite Graphitscheibe (27) bei einem Stillstand und/oder einer Anlaufphase der Welle (18) an der Rückseite (20a) des Turbinenrads (20) anliegt.

7. Rotorkartusche nach einem der vorhergehenden Ansprüche, **dadurch gekennzeichnet, dass** in und/oder an der Hülse (12) eine Wasserkühlungsanordnung (28) zum Kühlen des Axiallagers (16) und/oder des zumindest einen Radiallagers (14a, 14b) angeordnet ist.

8. Rotorkartusche nach einem der vorhergehenden Ansprüche, **dadurch gekennzeichnet, dass** die Hülse (12) ein Federelement (30) und/oder einen Aktor aufweist, welche dazu ausgebildet sind, eine bei einem Betrieb der Turbomaschine (1) temperaturbedingte Längenänderung und/oder axialkraftbedingte Positionsänderung der Welle (18) auszugleichen, wobei die Welle (18) durch das Federelement (30) und/oder den Aktor mit einer definierbaren Kraft in Axialrichtung beaufschlagbar ist.

9. Rotorkartusche nach einem der vorhergehenden Ansprüche, **dadurch gekennzeichnet, dass** die Hülse (12) ein Piezoelement oder ein Drucksensor (32) aufweist, welche dazu ausgebildet sind, eine auf die Welle (18) wirkende Axialkraft zu messen.

10. Rotorkartusche nach einem der vorhergehenden Ansprüche, **dadurch gekennzeichnet, dass** die Rotorkartusche (10) an unterschiedliche Gehäuseformen und -größen der Turbomaschine (1) anpassbar ist, wobei die Hülse (12) in Radialrichtung größer als das Verdichterrad (22) und kleiner als ein Diffusor der Turbomaschine (1) ausgebildet ist.

11. Turbomaschine (1)einer Brennkraftmaschine, mit einem Gehäuse (2) und einer in das Gehäuse (2) eingefügten Rotorkartusche (10) nach einem der Ansprüche 1 bis 10.

12. Verfahren zur Montage einer Turbomaschine (1)einer Brennkraftmaschine, mit den Schritten:
Vormontieren einer Rotorkartusche (10) durch
Anordnen (S1) zumindest eines Radiallagers (14a, 14b) in einer Hülse (12) der Rotorkartusche (10);
Anordnen (S2) eines Axiallagers (16) in oder an der Hülse (12) der Rotorkartusche (10);
Anordnen (S3) einer durch das zumindest eine Radiallager (14a, 14b) und das Axiallager (16) gelagerten Welle (18) in der Hülse (12) der Rotorkartusche (10);
Anordnen (S4) eines Turbinenrads (20) an einem ersten axialen Endabschnitt (18a) der Welle (18), auf der Welle (18);
Anordnen (S5) eines Verdichterrads (22) an einem zweiten axialen Endabschnitt (18b) der Welle (18), auf der Welle (18);
Einstellen (S6) eines Spaltmaßes eines ersten Spaltes X_{VR} zwischen der Rückseite (22a) des Verdichterrads (22) und einer benachbart zu der Rückseite (22a) des Verdichterrads (22) angeordneten ersten Wandfläche (2a) des Gehäuses (2), und eines Spaltmaßes eines zweiten Spaltes Xsv zwischen einer beschaufelten Seite (22b) des Verdichterrads (22) und einer benachbart zu der beschaufelten Seite (22b) des Verdichterrads (22) angeordneten zweiten Wandfläche (2b) des Gehäuses (2) durch Anordnen einer Einstellscheibe (24) benachbart zu einer Rückseite (22a) des Verdichterrads (22) auf der Welle (18); und
Einfügen (S7) der vormontierten Rotorkartusche (10) in ein Gehäuse (2) der Turbomaschine (1).

## Claims

1. Rotor cartridge (10) for a turbomachine (1) of an internal combustion engine, having:
a sleeve (12) which can be inserted into a housing (2) of the turbomachine (1) and in which at least one radial bearing (14a, 14b) is arranged and in and/or on which an axial bearing (16) is arranged;
a shaft (18) which is arranged in the sleeve (12) and supported by the at least one radial bearing (14a, 14b) and the axial bearing (16); and
a turbine wheel (20) which is arranged on the shaft (18) at a first axial end portion (18a) of the shaft (18), and a compressor wheel (22) which is arranged on the shaft (18) at a second axial end portion (18b) of the shaft (18); **characterized by** a setting disc (24) which is arranged on the shaft (18) adjacently to a rear side (22a) of the compressor wheel (22) and by means of which a gap size of a first gap X_{VR} between the rear side (22a) of the compressor wheel (22) and a first wall surface (2a) of the housing (2) that is arranged adjacently to the rear side (22a) of the compressor wheel (22) can be set, and by means of which a gap size of a second gap X_{SV} between a bladed side (22b) of the compressor wheel (22) and a second wall surface (2b) of the housing (2) that is arranged adjacently to the bladed side (22b) of the compressor wheel (22) can be set.

2. Rotor cartridge according to Claim 1, **characterized in that** the axial bearing (16) has a first stop (16a) and a second stop (16b), wherein the first stop (16a) is arranged in or on the sleeve (12) at a first axial end portion (12a) of the sleeve (12), and the second stop (16b) is arranged in or on the sleeve (12) at a second axial end portion (12b) of the sleeve (12).

3. Rotor cartridge according to Claim 2, **characterized in that** the first stop (16a) of the axial bearing (16) is arranged adjacently to the compressor wheel (22), and the second stop (16b) of the axial bearing (16) is arranged adjacently to the turbine wheel (20) .

4. Rotor cartridge according to one of the preceding claims, **characterized in that** the gap size of the first gap X_{VR} between the rear side (22a) of the compressor wheel (22) and the first wall surface (2a) of the housing (2) that is arranged adjacently to the rear side (22a) of the compressor wheel (22) is between 0.01 mm and 0.02 mm, and the gap size of the second gap X_{SV} between the bladed side (22b) of the compressor wheel (22) and the second wall surface (2b) of the housing (2) that is arranged adjacently to the bladed side (22b) of the compressor wheel (22) is between 0.01 mm and 0.03 mm.

5. Rotor cartridge according to one of the preceding claims, **characterized in that** a first graphite disc (26) is arranged between the rear side (22a) of the compressor wheel (22) and an outer wall surface of the first stop (16a) of the axial bearing (16), and a second graphite disc (27) is arranged between a rear side (20a) of the turbine wheel (20) and an outer wall surface of the second stop (16b) of the axial bearing (16).

6. Rotor cartridge according to Claim 5, **characterized in that** the second graphite disc (27) bears against the rear side (20a) of the turbine wheel (20) during a standstill and/or a starting phase of the shaft (18) .

7. Rotor cartridge according to one of the preceding claims, **characterized in that** a water cooling arrangement (28) for cooling the axial bearing (16) and/or the at least one radial bearing (14a, 14b) is arranged in and/or on the sleeve (12).

8. Rotor cartridge according to one of the preceding claims, **characterized in that** the sleeve (12) has a spring element (30) and/or an actuator which are designed to compensate for a temperature-related change in length and/or an axial force-related change in position of the shaft (18) during an operation of the turbomachine (1), wherein a definable force can be applied in the axial direction to the shaft (18) by the spring element (30) and/or the actuator.

9. Rotor cartridge according to one of the preceding claims, **characterized in that** the sleeve (12) has a piezo element or a pressure sensor (32) which are designed to measure an axial force acting on the shaft (18).

10. Rotor cartridge according to one of the preceding claims, **characterized in that** the rotor cartridge (10) can be adapted to different housing shapes and sizes of the turbomachine (1), wherein the sleeve (12) is designed to be larger in the radial direction than the compressor wheel (22) and to be smaller than a diffusor of the turbomachine (1).

11. Turbomachine (1) of an internal combustion engine, having a housing (2) and a rotor cartridge (10) according to one of Claims 1 to 10 that is inserted into the housing (2).

12. Method for mounting a turbomachine (1) of an internal combustion engine, comprising the following steps:
premounting a rotor cartridge (10) by arranging (S1) at least one radial bearing (14a, 14b) in a sleeve (12) of the rotor cartridge (10);
arranging (S2) an axial baring (16) in or on the sleeve (12) of the rotor cartridge (10);
arranging (S3) a shaft (18), which is supported by the at least one radial bearing (14a, 14b) and the axial bearing (16), in the sleeve (12) of the rotor cartridge (10);
arranging (S4) a turbine wheel (20) on the shaft (18) at a first axial end portion (13a) of the shaft (18) ;
arranging (S5) a compressor wheel (22) on the shaft (18) at a second axial end portion (18b) of the shaft (18);
setting (S6) a gap size of a first gap X_{VR} between the rear side (22a) of the compressor wheel (22) and a first wall surface (2a) of the housing (2) that is arranged adjacently to the rear side (22a) of the compressor wheel (22), and setting a gap size of a second gap X_{SV} between a bladed side (22b) of the compressor wheel (22) and a second wall surface (2b) of the housing (2) that is arranged adjacently to the bladed side (22b) of the compressor wheel (22), by arranging a setting disc (24) adjacently to a rear side (22a) of the compressor wheel (22) on the shaft (18); and
inserting (S7) the premounted rotor cartridge (10) into a housing (2) of the turbomachine (1).

## Revendications

1. Cartouche de rotor (10) pour une turbomachine (1) d'un moteur à combustion interne, avec:
une douille (12) insérable dans un boîtier (2) de la turbomachine (1), dans laquelle au moins un palier radial (14a, 14b) et dans et/ou sur laquelle un palier axial (16) sont disposés;
un arbre (18) disposé dans la douille (12) et supporté par au moins un palier radial (14a, 14b) et le palier axial (16); et
une roue de turbine (20) disposée sur l'arbre (18) sur une première partie d'extrémité axiale (18a) de l'arbre (18) et une roue de compresseur (22) disposée sur l'arbre (18) sur une deuxième partie d'extrémité axiale (18b) de l'arbre (18),
**caractérisée par** un disque de réglage (24) disposé sur l'arbre (18), à proximité d'un côté arrière (22a) de la roue de compresseur (22), avec lequel une largeur de fente d'une première fente X_{VR} entre le côté arrière (22a) de la roue de compresseur (22) et une première face de paroi (2a) du boîtier (2) disposée à proximité du côté arrière (22a) de la roue de compresseur (22) et une largeur de fente d'une deuxième fente X_{SV} entre un côté garni d'aubes (22b) de la roue de compresseur (22) et une deuxième face de paroi (2b) du boîtier (2) disposée à proximité du côté garni d'aubes (22b) de la roue de compresseur (22) peuvent être réglées.

2. Cartouche de rotor selon la revendication 1, **caractérisée en ce que** le palier axial (16) présente une première butée (16a) et une deuxième butée (16b), dans laquelle la première butée (16a) est disposée sur une première partie d'extrémité axiale (12a) de la douille (12) dans ou sur la douille (12) et la deuxième butée (16b) est disposée sur une deuxième partie d'extrémité axiale (12b) de la douille (12) dans ou sur la douille (12) .

3. Cartouche de rotor selon la revendication 2, **caractérisée en ce que** la première butée (16a) du palier axial (16) est disposée à proximité de la roue de compresseur (22) et la deuxième butée (16b) du palier axial (16) est disposée à proximité de la roue de turbine (20) .

4. Cartouche de rotor selon l'une quelconque des revendications précédentes, **caractérisée en ce que** la largeur de fente de la première fente X_{VR} entre le côté arrière (22a) de la roue de compresseur (22) et la première face de paroi (2a) du boîtier (2) disposée à proximité du côté arrière (22a) de la roue de compresseur (22) vaut entre 0,01 mm et 0,02 mm et la largeur de fente de la deuxième fente X_{SV} entre le côté garni d'aubes (22b) de la roue de compresseur (22) et la deuxième face de paroi (2b) du boîtier (2) disposée à proximité du côté garni d'aubes (22b) de la roue de compresseur (22) vaut entre 0,01 mm et 0,03 mm.

5. Cartouche de rotor selon l'une quelconque des revendications précédentes, **caractérisée en ce qu'**un premier disque de graphite (26) est disposé entre le côté arrière (22a) de la roue de compresseur (22) et une face de paroi extérieure de la première butée (16a) du palier axial (16) et un deuxième disque de graphite (27) est disposé entre un côté arrière (20a) de la roue de turbine (20) et une face de paroi extérieure de la deuxième butée (16b) du palier axial (16).

6. Cartouche de rotor selon la revendication 5, **caractérisée en ce que** le deuxième disque de graphite (27) s'applique sur le côté arrière (20a) de la roue de turbine (20) lors d'un arrêt et/ou d'une phase de démarrage de l'arbre (18).

7. Cartouche de rotor selon l'une quelconque des revendications précédentes, **caractérisée en ce qu'**un dispositif de refroidissement à l'eau (28) est disposé dans et/ou sur la douille (12) pour le refroidissement du palier axial (16) et/ou dudit au moins un palier radial (14a, 14b).

8. Cartouche de rotor selon l'une quelconque des revendications précédentes, **caractérisée en ce que** la douille (12) présente un élément de ressort (30) et/ou un actionneur, qui sont configurés pour compenser une variation de longueur de l'arbre (18) due à la température pendant le fonctionnement de la turbomachine (1) et/ou un changement de position de l'arbre (18) dû à une force axiale, dans laquelle l'arbre (18) peut être soumis en direction axiale à une force définissable au moyen de l'élément de ressort (30) et/ou de l'actionneur.

9. Cartouche de rotor selon l'une quelconque des revendications précédentes, **caractérisée en ce que** la douille (12) présente un élément piézoélectrique ou un capteur de pression (32), qui sont configurés pour mesurer une force axiale agissant sur l'arbre (18).

10. Cartouche de rotor selon l'une quelconque des revendications précédentes, **caractérisée en ce que** la cartouche de rotor (10) peut être adaptée à différentes formes et grandeurs du boîtier de la turbomachine (1), dans laquelle la douille (12) est en direction radiale plus grande que la roue de compresseur (22) et plus petite qu'un diffuseur de la turbomachine (1).

11. Turbomachine (1) d'un moteur à combustion interne, avec un boîtier (2) et une cartouche de rotor (10) selon l'une quelconque des revendications précédentes 1 à 10 insérée dans le boîtier (2).

12. Procédé de montage d'une turbomachine (1) d'un moteur à combustion interne, comprenant les étapes suivantes:
pré-assembler une cartouche de rotor (10) par
agencement (S1) d'au moins un palier radial (14a, 14b) dans une douille (12) de la cartouche de rotor (10);
agencement (S2) d'un palier axial (16) dans ou sur la douille (12) de la cartouche de rotor (10);
agencement (S3) d'un arbre (18) supporté par ledit au moins un palier radial (14a, 14b) et le palier axial (16) dans la douille (12) de la cartouche de rotor (10);
agencement (S4) d'une roue de turbine (20) sur une première partie d'extrémité axiale (18a) de l'arbre (18) sur l'arbre (18);
agencement (S5) d'une roue de compresseur (22) sur une deuxième partie d'extrémité axiale (18b) de l'arbre (18) sur l'arbre (18);
régler (S6) une largeur de fente d'une première fente X_{VR} entre le côté arrière (22a) de la roue de compresseur (22) et une première face de paroi (2a) du boîtier (2) disposée à proximité du côté arrière (22a) de la roue de compresseur (22), et une largeur de fente d'une deuxième fente X_{SV} entre un côté garni d'aubes (22b) de la roue de compresseur (22) et une deuxième face de paroi (2b) du boîtier (2) disposé à proximité du côté garni d'aubes (22b) de la roue de compresseur (22) par l'agencement d'un disque de réglage (24) à proximité d'un côté arrière (22a) de la roue de compresseur (22) sur l'arbre (18); et
insérer (S7) la cartouche de rotor préassemblée (10) dans un boîtier (2) de la turbomachine (1).
